# EUROPEAN PATENT SPECIFICATION

(11) **EP 3 940 906 B1**
(45) Date of publication and mention of the grant of the patent: **31.07.2024**
(21) Application number: 19919465.5
(22) Date of filing: 12.03.2019
(51) Int. Cl.: H02G 5/10, H02B 1/20, H02G 5/00

(54) **INSULATING PROTECTIVE COVER BODY**
ISOLIERENDER SCHUTZABDECKUNGSKÖRPER
CORPS DE COUVERCLE PROTECTEUR ISOLANT

(43) Date of publication of application: 19.01.2022
(73) Proprietor: MITSUBISHI ELECTRIC CORPORATION, Chiyoda-ku Tokyo 100-8310 (JP)
(72) Inventor: YI, Sangwoo, Tokyo 100-8310 (JP); YUKI, Hiroto, Tokyo 100-8310 (JP)
(74) Representative: Witte, Weller & Partner Patentanwälte mbB
(86) International application number: PCT/JP2019/010017
(87) International publication number: WO 2020/183611

(56) References cited:
- WO-A1-2012/066792
- WO-A1-2017/183067
- WO-A1-88/02942
- CN-A- 102 969 658
- CN-U- 203 423 382
- JP-A- S52 145 795
- JP-A- S61 224 220
- JP-U- S5 853 482
- JP-U- S5 853 482
- JP-U- S51 137 681
- JP-U- S6 017 573
- US-A1- 2017 098 489

## Description

### TECHNICAL FIELD

The present disclosure relates to an insulating protective cover body.

### BACKGROUND ART

A plurality of conductors are disposed inside a switchboard used for power receiving/distributing equipment. Fixation portions at which the respective conductors are fixed to the inside of the switchboard, and connection portions connecting the conductors to each other, are disposed inside the switchboard. Insulating protective cover bodies are disposed so as to cover the fixation portions and the connection portions in order to protect the fixation portions and the connection portions from a hand of a person, dust, and the like.

Regarding a conventional insulating protective cover body, a configuration has been disclosed in which an insulating protective cover body is made of a dip-molded insulating resin, has a lower end portion serving as a matching surface along horizontal buses, and covers an exposed portion of a connection portion of the horizontal buses (see, for example, Patent Document 1). The matching surface is fastened by means of ring-shaped clips.

In addition, regarding another conventional insulating protective cover body, a configuration has been disclosed in which a drum-shaped projection is disposed at a head portion of a fixing bolt for fixing a conductor to the inside of a switchboard, and in which an insulator cap for covering the entire head portion of the fixing bolt is fitted to the projection (see, for example, Patent Document 2).

Patent Document 3 relates to a flexible insulation sheet to be applied in a bus branch portion.

Patent Document 4, according to its abstract, relates to an insulating protection cover body with which the size of a device can be reduced and heat dissipation performance is improved. The insulating protection cover body is made of a flexible insulator that covers a connection portion of a first conductor and a second conductor by sliding the connection portion. The insulating protection cover body is provided with: a first opening portion into which the first conductor is inserted; a second opening portion which is provided on the side opposing the first opening portion and into which the second conductor is inserted; a first exterior wall positioned on the upper side of the second opening portion, bending when the connection portion of the first and second conductors are inserted, and having a flexibility of returning to an original state after the connection portion of the first and second conductors are inserted; and a second exterior wall positioned on the lower side of the second opening portion, bending when the first conductor and the connection portion of the first and second conductors are inserted, and having a flexibility of returning to an original state after the first conductor and the connection portion of the first and second conductors are inserted.

Patent Document 5, according to its abstract, relates to a switch cabinet bus-bar insulation protection box is made of insulating materials of an amorphous polymer and crystalline and semi-crystalline polymers. The switch cabinet bus-bar insulation protection box comprises an insulated flat base, an insulated box body protruding from the insulated flat base is arranged on the insulated flat base, and the insulated box body has a plurality of cable openings. The switch cabinet bus-bar insulation protection box can carry out insulation protection on a switch cabinet bus-bar, meet the working requirements of a switch cabinet for full closeness, full protection and full cutting-off to the maximum and effectively prevent a foreign body from jumping in to cause inter-cable short circuit, thereby prolonging the service life of the switch cabinet.

Patent Document 6, according to its abstract, relates to an electrical system that is provided by electrically isolating complex bus geometries by using one or more substantially flat and electrically insulating sheets. The sheet may have one or more fold lines which allow the sheet to fold in multiple directions and ways over varying configurations of power conductors. The sheet may fit within the constraints of preconfigured electrical system components without the need for redesigning such components. The sheet may have a dielectric strength per mil effective to isolate power conductors based on maximum charge and proximity of the power conductors.

Patent Document 7, according to its abstract, relates to an insulation for fluid conduits and/or electrical conductor installations comprising a strip shaped flexible covering having insulation properties the covering comprising two side portions interconnected by a central longitudinal hinge and/or support, the outer longitudinal edges of each portion being adapted to be releasably interengaged.

### CITATION LIST

### PATENT DOCUMENT

Patent Document 1: Japanese Laid-Open Patent Publication No. 63-141272
Patent Document 2: Japanese Laid-Open Patent Publication No. 3-270621
Patent Document 3: JP S58 53482 U
Patent Document 4: WO 2017/ 183 067 A1
Patent Document 5: CN 203 423 382 U
Patent Document 6: US 2017/ 098 489 A1
Patent Document 7: WO 1988/ 002 942 A1

### SUMMARY OF THE INVENTION

### PROBLEMS TO BE SOLVED BY THE INVENTION

In association with technological development, devices such as switchboards have been required to have increased capacities and reduced sizes in order to handle higher current with smaller devices. In a device that causes current to flow such as a switchboard, increase in the current-carrying capacity thereof leads to increase in the heat generation amount of a conductor of the device according to an electrical resistance that is intrinsic to the conductor, and, in association with heat generation by the conductor, the temperature of the device increases. In addition, reduction in the size of the device leads to reduction in the area for heat dissipation, and thus heat dissipation performance deteriorates and the temperature further increases. Moreover, contact resistance is generated at a connection portion, and thus the temperature thereof easily increases. Therefore, it is important to ensure heat dissipation performance for capacity increase and size reduction.

In the above-described Patent Document 1, since the connection portion of the horizontal buses is covered by the insulating protective cover body, the connection portion can be protected from a hand of a person, dust, and the like. However, the insulating protective cover body is fastened at the matching surface thereof by means of the ring-shaped clips, and firm fixation by means of the ring-shaped clips leads to absence of a gap between the connection portion of the conductors and the insulating protective cover body. Thus, no ventilation path can be ensured, whereby a problem arises in that heat dissipation performance deteriorates. Meanwhile, loose fastening by means of the ring-shaped clips to ensure a ventilation path raises a concern that the ring-shaped clips and the insulating protective cover body are detached from the disposition positions owing to vibrations or the like. Further, no means for primary fixation of the insulating protective cover body is present at the time of fastening, and fastening is performed with both hands. Thus, a wide space is necessary, whereby a problem arises in that this configuration is not suitable for size reduction of a device.

In the above-described Patent Document 2, since the entire head portion of the fixing bolt is covered by the insulator cap, a fixation portion can be protected from a hand of a person, dust, and the like. However, the insulator cap is brought into close contact with the projection and covers the entire head portion of the fixing bolt. Thus, no ventilation path can be ensured, whereby a problem arises in that heat dissipation performance deteriorates. Further, another member, i.e., the drum-shaped projection, is needed on the conductor side. Moreover, the insulator cap is fixed by being only fitted to the projection, and thus there is a concern that the cap comes off owing to elapse of time, vibrations, or the like.

The present disclosure has been made to solve the aforementioned problems, and an object of the present disclosure is to obtain an insulating protective cover body in which heat dissipation performance is ensured.

### SOLUTION TO THE PROBLEMS

Therefore, there is provided an insulating protective cover body according to independent claim 1.

### EFFECT OF THE INVENTION

The insulating protective cover body according to the present disclosure makes it possible to ensure heat dissipation performance.

### BRIEF DESCRIPTION OF THE DRAWINGS

[FIG. 1] FIG. 1 is a perspective view of an insulating protective cover body according to embodiment 1.
[FIG. 2] FIG. 2 is a top view of the insulating protective cover body according to embodiment 1 attached to a first conductor and a second conductor.
[FIG. 3] FIG. 3 is a cross-sectional view taken at the alternate long and short dash line A-A in FIG. 2.
[FIG. 4] FIG. 4 is a cross-sectional view taken at the alternate long and short dash line B-B in FIG. 3.
[FIG. 5] FIG. 5 is a partial perspective cross-sectional view of the insulating protective cover body according to embodiment 1 attached to the first conductor and the second conductor.
[FIG. 6] FIG. 6 is a front view of the first conductor and the second conductor to be covered by the insulating protective cover body.
[FIG. 7] FIG. 7 is a perspective view of an insulating protective cover body according to embodiment 2.
[FIG. 8] FIG. 8 is a top view of the insulating protective cover body according to embodiment 2 attached to the first conductor and the second conductor.
[FIG. 9] FIG. 9 is a partial cross-sectional view taken at the alternate long and short dash line C-C in FIG. 8.
[FIG. 10] FIG. 10 is a cross-sectional view of an insulating protective cover body according to embodiment 3 attached to the first conductor and the second conductor.
[FIG. 11] FIG. 11 is a cross-sectional view taken at the alternate long and short dash line D-D in FIG. 10.
[FIG. 12] FIG. 12 is a partial plan view of an inner surface of the insulating protective cover body according to embodiment 3.
[FIG. 13] FIG. 13 is a cross-sectional view of an insulating protective cover body according to embodiment 4 attached to the first conductor and the second conductor.
[FIG. 14] FIG. 14 is a cross-sectional view taken at the alternate long and short dash line E-E in FIG. 13.
[FIG. 15] FIG. 15 is a partial plan view of the inner surface of the insulating protective cover body according to embodiment 4.
[FIG. 16] FIG. 16 is a perspective cross-sectional view showing, in a partially cut manner, an insulating protective cover body according to embodiment 5 in a state of being attached to the first conductor and the second conductor.
[FIG. 17] FIG. 17 is a perspective cross-sectional view showing, in a partially cut manner, another insulating protective cover body according to embodiment 5 in the state of being attached to the first conductor and the second conductor.
[FIG. 18] FIG. 18 is a perspective cross-sectional view showing, in a partially cut manner, an example in which the insulating protective cover body is used.
[FIG. 19] FIG. 19 is a perspective cross-sectional view showing, in a partially cut manner, another example in which the insulating protective cover body is used.

### DESCRIPTION OF EMBODIMENTS

Hereinafter, insulating protective cover bodies according to embodiments of the present disclosure will be described with reference to the drawings. Description will be given while the same or corresponding members and parts in the drawings are denoted by the same reference characters.

### Embodiment 1 (not part of claimed invention)

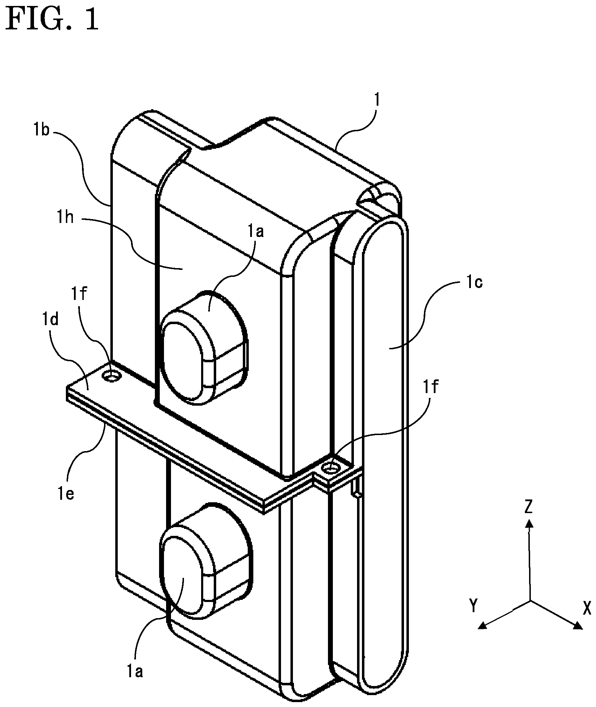

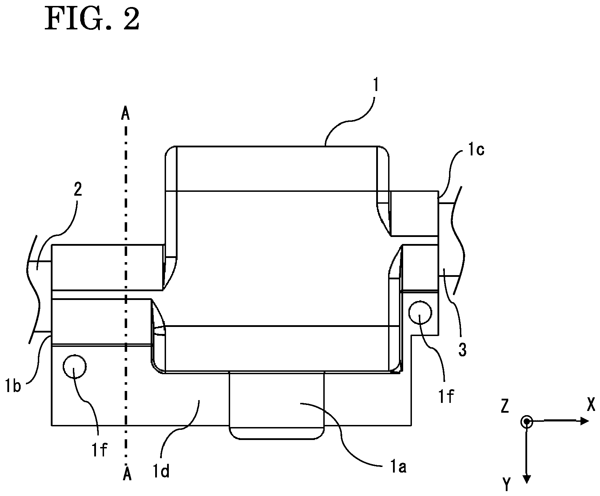

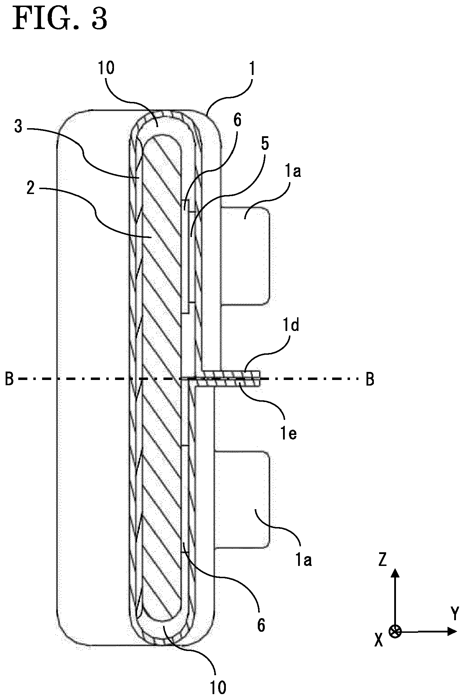

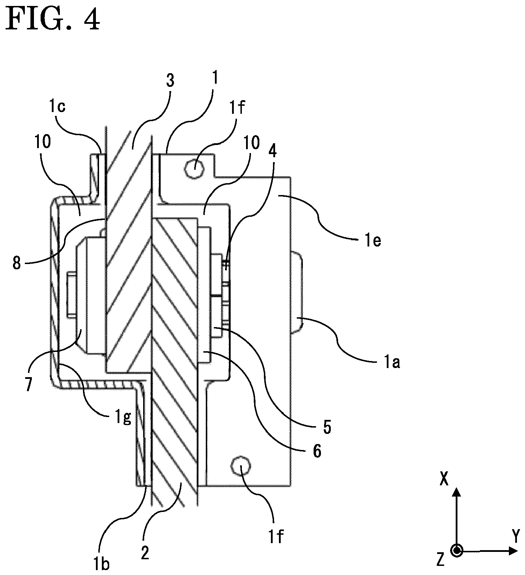

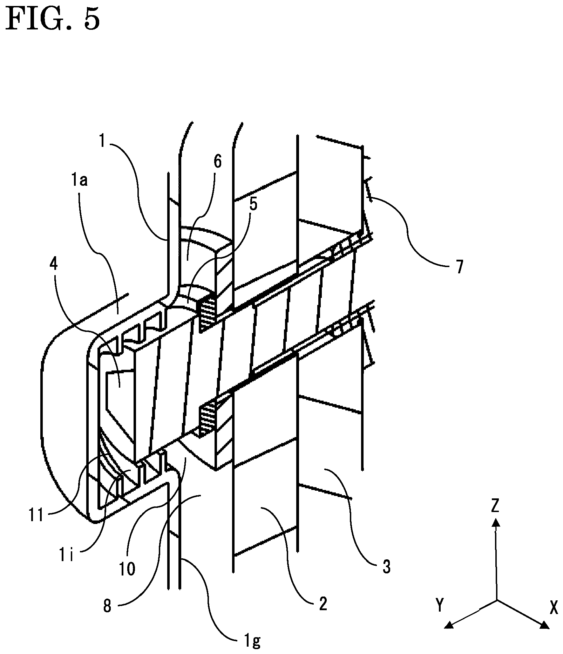

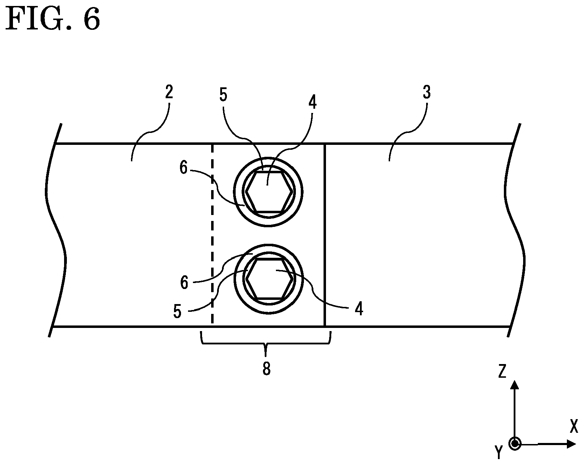

FIG. 1 is a perspective view of an insulating protective cover body according to embodiment 1. FIG. 2 is a top view of the insulating protective cover body attached to a first conductor and a second conductor. FIG. 3 is a cross-sectional view taken at the alternate long and short dash line A-A in FIG. 2. FIG. 4 is a cross-sectional view taken at the alternate long and short dash line B-B in FIG. 3. FIG. 5 is a partial perspective cross-sectional view of the insulating protective cover body attached to the first conductor and the second conductor. FIG. 6 is a front view of the first conductor and the second conductor to be covered by the insulating protective cover body. An insulating protective cover body 1 is a cover body made of a flexible material openable and closable at a cut portion thereof disposed along the direction in which a first conductor and a second conductor extend. Regarding a first conductor 2 and a second conductor 3 shown in FIG. 6, the first conductor 2 and the second conductor 3 are connected at two locations by means of conductor connection bolts 4 and conductor connection nuts 7 (not shown in FIG. 6) via spring washers 5 and large washers 6. The spring washers 5 are used to prevent the conductor connection bolts 4 from loosening, and the large washers 6 are used to increase the areas in which forces of fastening the conductor connection bolts 4 are applied. The insulating protective cover body 1 surrounds and covers a connection portion 8 at which the first conductor 2 and the second conductor 3 extending in a direction are connected so as to overlap with each other, and has conductor insertion holes provided so as to oppose to each other, the first conductor 2 being inserted in one of the conductor insertion holes, the second conductor 3 being inserted in another one of the conductor insertion holes. This insulating protective cover body 1 will be described below.

The insulating protective cover body 1 is formed from, for example, vinyl chloride. As shown in FIG. 1, the insulating protective cover body 1 has a first conductor insertion hole 1b and a second conductor insertion hole 1c opposing to each other, and the first conductor insertion hole 1b and the second conductor insertion hole 1c penetrate inside the insulating protective cover body 1. When the insulating protective cover body 1 covers the connection portion 8 shown in FIG. 6, the first conductor 2 is inserted from the first conductor insertion hole 1b and the second conductor 3 is inserted from the second conductor insertion hole 1c, as shown in FIG. 2. The insulating protective cover body 1 is formed in such a dimension and a shape that a space serving as a ventilation path 10 in communication with outside is formed between an inner surface 1g of the insulating protective cover body 1 and each of the first conductor 2 and the second conductor 3. Heat generated at each of the first conductor 2, the second conductor 3, and the connection portion 8 is dissipated to outside through the ventilation path 10. Therefore, increases in the temperatures of the first conductor 2, the second conductor 3, and the insulating protective cover body 1 are suppressed.

The insulating protective cover body 1 includes, at positions thereof opposing to the conductor connection bolts 4 of the connection portion 8, conductor connection bolt cap portions 1a which protrude outward from an outer surface 1h and which have inner sides that are tubular cavity portions 11. Each conductor connection bolt cap portion 1a is fitted to the corresponding conductor connection bolt 4 and formed according to the size of the conductor connection bolt 4. As shown in FIG. 5, conductor connection bolt fixing projections 1i projecting along a side surface of each cavity portion 11 are disposed. The conductor connection bolt 4 is held by bringing a side surface thereof into contact with the conductor connection bolt fixing projections 1i, and thus the insulating protective cover body 1 does not easily come off from the connection portion 8.

The cut portion includes a first insulating protective cover body cut portion 1d and a second insulating protective cover body cut portion 1e having cut surfaces which face-to-face oppose to each other. The first insulating protective cover body cut portion 1d and the second insulating protective cover body cut portion 1e are provided with insulating protective cover body fastening holes 1f penetrating therethrough. Each insulating protective cover body fastening hole 1f is a hole through which the insulating protective cover body 1 is fixed by means of a pin, a bolt, or the like. The insulating protective cover body 1 is fixed to the connection portion 8 by using both the conductor connection bolt cap portions 1a and the insulating protective cover body fastening holes 1f, and thus is prevented from coming off owing to vibrations or impact.

Next, an operation of attaching the insulating protective cover body 1 to the connection portion 8 will be described. Either or both of the first insulating protective cover body cut portion 1d and the second insulating protective cover body cut portion 1e are gripped so as to open these cut portions, and the connection portion 8 is covered by the insulating protective cover body 1 such that the first conductor 2 and the second conductor 3 shown in FIG. 6 are respectively inserted in the first conductor insertion hole 1b and the second conductor insertion hole 1c. Next, the first insulating protective cover body cut portion 1d and the second insulating protective cover body cut portion 1e are closed, and each cavity portion 11 and the corresponding conductor connection bolt 4 are fitted to each other. The conductor connection bolt 4 is held by the conductor connection bolt fixing projections 1i so that the insulating protective cover body 1 is stably subjected to primary fixation to the connection portion 8. Lastly, the positions of the insulating protective cover body fastening holes 1f of both the first insulating protective cover body cut portion 1d and the second insulating protective cover body cut portion 1e are matched with each other, and secondary fixation is performed through the insulating protective cover body fastening holes 1f by means of pins or bolts. In this manner, the insulating protective cover body 1 can be subjected to primary fixation by fitting each conductor connection bolt 4 to the corresponding conductor connection bolt cap portion 1a. Therefore, convenience in an attaching operation is improved, and the operation can be performed with one hand in a small space.

As described above, the insulating protective cover body 1 according to embodiment 1 is formed in such a dimension and a shape that the space serving as the ventilation path 10 in communication with outside is formed between the inner surface 1g of the insulating protective cover body 1 and each of the first conductor 2 and the second conductor 3. Thus, heat generated at each of the first conductor 2, the second conductor 3, and the connection portion 8 can be easily dissipated to outside, whereby heat dissipation performance can be ensured. In addition, the insulating protective cover body 1 includes the conductor connection bolt cap portions 1a to be fitted to the conductor connection bolts 4 of the connection portion 8 of the conductors. Thus, the insulating protective cover body 1 can be easily subjected to primary fixation to the connection portion 8. Therefore, convenience in an attaching operation is improved, and an attaching operation for the insulating protective cover body 1 can be performed with one hand in a small space. In addition, the plurality of conductor connection bolt fixing projections 1i are disposed on the side surface of the cavity portion 11 of each conductor connection bolt cap portion 1a, and thus the insulating protective cover body 1 can be easily prevented from coming off from the connection portion 8 at the time of primary fixation. In addition, the insulating protective cover body 1 includes the first insulating protective cover body cut portion 1d and the second insulating protective cover body cut portion 1e which face-to-face oppose to each other, and thus the insulating protective cover body 1 can be easily opened and closed by gripping either or both of the first insulating protective cover body cut portion 1d and the second insulating protective cover body cut portion 1e. In addition, the first insulating protective cover body cut portion 1d and the second insulating protective cover body cut portion 1e are provided with the insulating protective cover body fastening holes 1f penetrating therethrough, and thus secondary fixation can be easily performed through the insulating protective cover body fastening holes 1f by means of pins or bolts, whereby the insulating protective cover body 1 can be prevented from coming off from the connection portion 8. In addition, each conductor connection bolt cap portion 1a and the corresponding conductor connection bolt 4 are fitted to each other, and thus an attaching operation for the insulating protective cover body 1 can be performed without disposing another member.

### Embodiment 2 (not part of claimed invention)

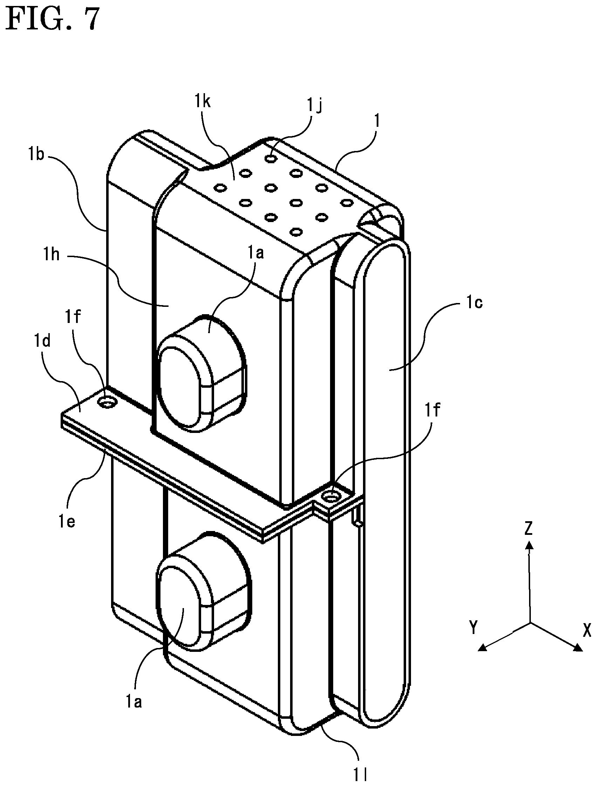

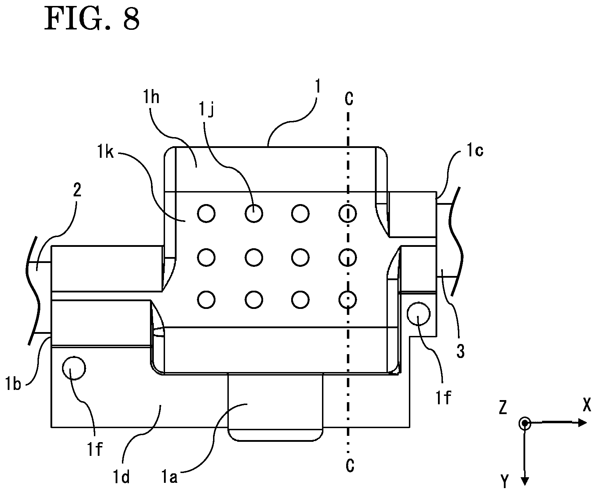

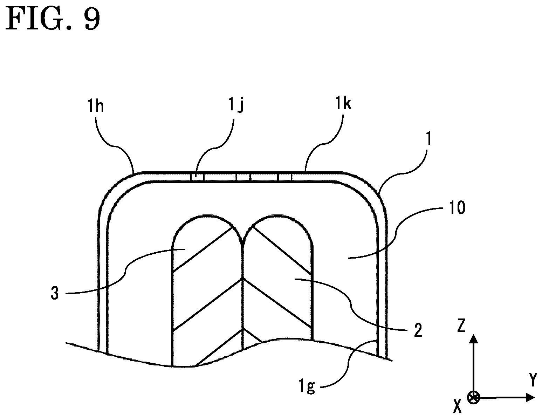

An insulating protective cover body 1 according to embodiment 2 will be described. FIG. 7 is a perspective view of the insulating protective cover body 1. FIG. 8 is a top view of the insulating protective cover body 1 attached to the first conductor 2 and the second conductor 3. FIG. 9 is a partial cross-sectional view taken at the alternate long and short dash line C-C in FIG. 8. The insulating protective cover body 1 according to embodiment 2 has a configuration in which ventilation holes 1j are provided in addition to the components of the insulating protective cover body 1 described in embodiment 1.

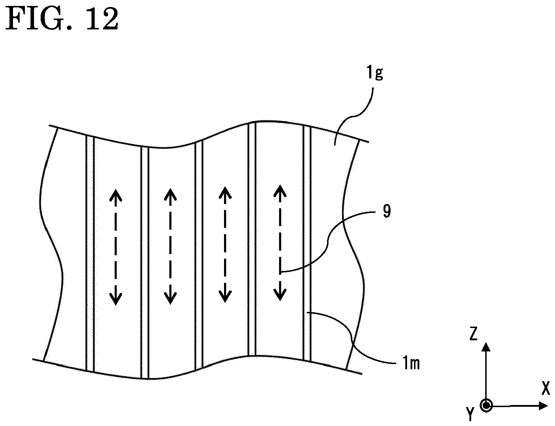

The insulating protective cover body 1 is provided with the ventilation holes 1j through which the space serving as the ventilation path 10 and outside are in communication with each other. The ventilation holes 1j are provided on each of one side and another side of the insulating protective cover body 1 which oppose to each other. In FIG. 7, 12 ventilation holes 1j are provided in an upper surface 1k on the one side, and 12 ventilation holes 1j (not shown) are provided in the same manner also in a lower surface 1l on the other side. Since the ventilation holes 1j are provided, the outside of the insulating protective cover body 1 and the ventilation path 10 are in close communication with each other. Thus, dissipation of heat generated at each of the first conductor 2, the second conductor 3, and the connection portion 8 to outside is facilitated. In addition, since the ventilation holes 1j are provided in the upper surface 1k and the lower surface 1l, air flows are formed such that: air heated inside the ventilation path 10 is discharged from the upper surface 1k; and outside air is introduced from the lower surface 1l. Therefore, heat dissipation is further facilitated.

It is noted that although a configuration in which the ventilation holes 1j are provided in the upper surface 1k and the lower surface 1l has been described above, the present disclosure is not limited to this configuration and may be a configuration in which the ventilation holes 1j are provided in another outer surface 1h. Further, the direction in which the insulating protective cover body 1 is disposed, is not limited to the direction shown in FIG. 7.

As described above, in the insulating protective cover body 1 according to embodiment 2, since the ventilation holes 1j through which the space serving as the ventilation path 10 and outside are in communication with each other are provided, dissipation of heat generated at the connection portion 8 to outside can be facilitated. In addition, since the ventilation holes 1j are provided in the upper surface 1k and the lower surface 1l, air flows are formed from the lower surface 1l toward the upper surface 1k, and heat dissipation can be further facilitated.

### Embodiment 3 (under the scope of the claims)

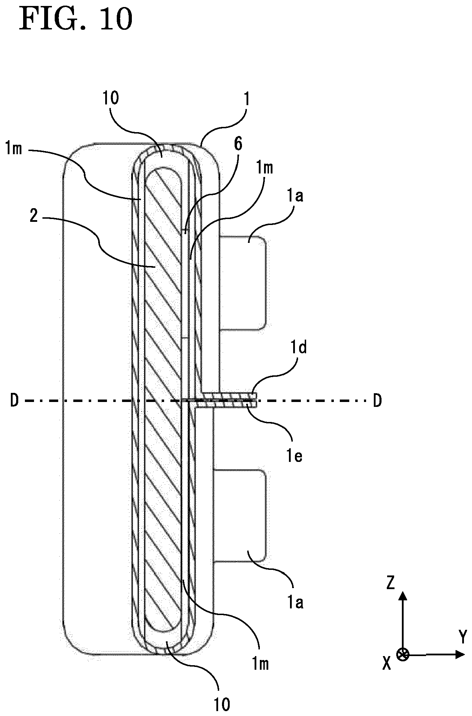

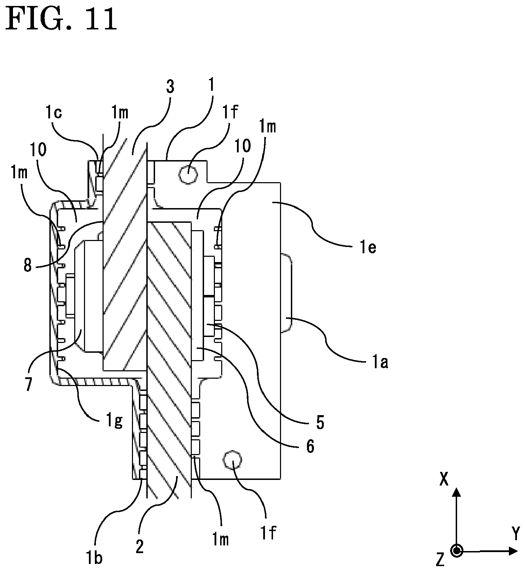

An insulating protective cover body 1 according to embodiment 3 will be described. FIG. 10 is a cross-sectional view of the insulating protective cover body 1 attached to the first conductor 2 and the second conductor 3. FIG. 11 is a cross-sectional view taken at the alternate long and short dash line D-D in FIG. 10. FIG. 12 is a partial plan view of the inner surface 1g of the insulating protective cover body 1. The insulating protective cover body 1 according to embodiment 3 has a configuration in which linear projections 1m which are projections are disposed on the inner surface 1g in addition to the components of the insulating protective cover body 1 described in embodiment 1.

The linear projections 1m are a plurality of linear protrusions disposed in a direction intersecting with the direction in which the first conductor 2 and the second conductor 3 extend. The linear protrusions are disposed between the first conductor insertion hole 1b which is the one of the conductor insertion holes and the second conductor insertion hole 1c which is the other one of the conductor insertion holes. Since the linear projections 1m are provided, the first conductor 2 and the second conductor 3 can be assuredly separated from the inner surface 1g. Since the first conductor 2 and the second conductor 3 are separated from the inner surface 1g so that air spaces are interposed therebetween, increase in the temperature of the insulating protective cover body 1 is suppressed. In addition, since air flows 9 are formed along the linear projections 1m as indicated by the broken-line arrows in FIG. 12, dissipation of heat generated at each of the first conductor 2, the second conductor 3, and the connection portion 8 to outside is facilitated.

As described above, in the insulating protective cover body 1 according to embodiment 3, the plurality of linear projections 1m which are projections are disposed, on the inner surface 1g, between the first conductor insertion hole 1b and the second conductor insertion hole 1c. Thus, the first conductor 2 and the second conductor 3 are assuredly separated from the inner surface 1g, whereby increase in the temperature of the insulating protective cover body 1 can be suppressed. In addition, since the air flows 9 are formed along the linear projections 1m, dissipation of heat generated at each of the first conductor 2, the second conductor 3, and the connection portion 8 to outside is facilitated.

### Embodiment 4 (under the scope of the claims)

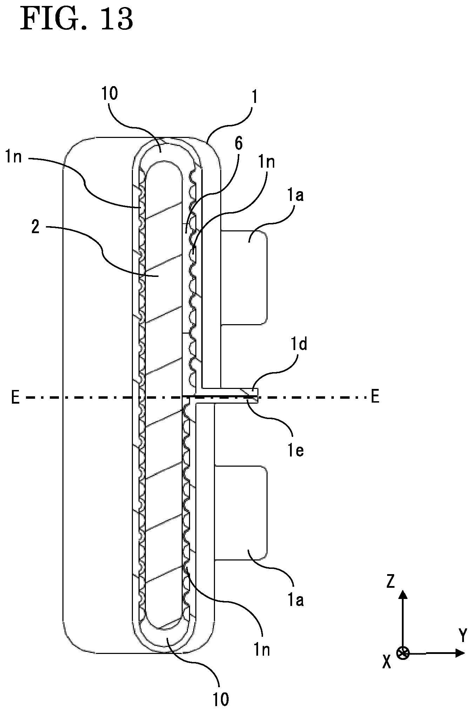

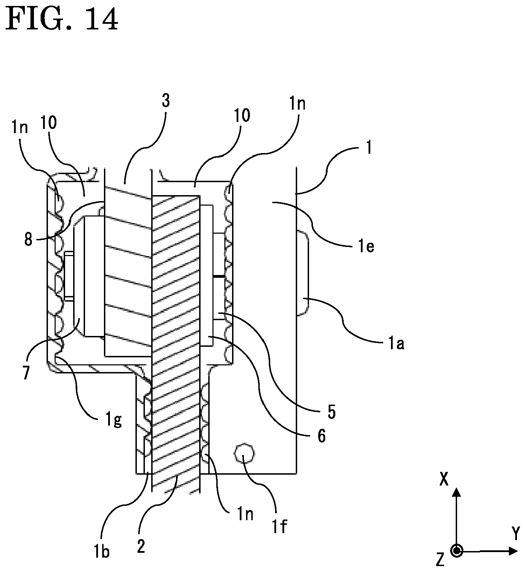

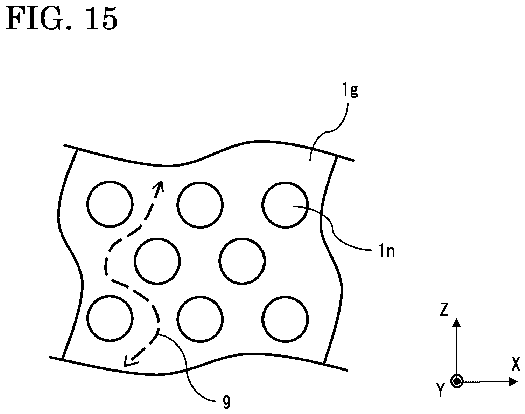

An insulating protective cover body 1 according to embodiment 4 will be described. FIG. 13 is a cross-sectional view of the insulating protective cover body 1 attached to the first conductor 2 and the second conductor 3. FIG. 14 is a cross-sectional view taken at the alternate long and short dash line E-E in FIG. 13. FIG. 15 is a partial plan view of the inner surface 1g of the insulating protective cover body 1. The insulating protective cover body 1 according to embodiment 4 has a configuration in which hemispheric projections 1n which are projections are disposed on the inner surface 1g in addition to the components of the insulating protective cover body 1 described in embodiment 1.

The hemispheric projections 1n are hemispheric protrusions arranged in a staggered pattern between the first conductor insertion hole 1b which is the one of the conductor insertion holes and the second conductor insertion hole 1c which is the other one of the conductor insertion holes. Since the hemispheric projections 1n are provided, the first conductor 2 and the second conductor 3 can be assuredly separated from the inner surface 1g. Since the first conductor 2 and the second conductor 3 are separated from the inner surface 1g so that air spaces are interposed therebetween, increase in the temperature of the insulating protective cover body 1 is suppressed. In addition, since air flows 9 are formed along paths between the hemispheric projections 1n as indicated by the broken-line arrow in FIG. 15, dissipation of heat generated at the connection portion 8 to outside is facilitated. In addition, hemispheric shapes are less prone to deformation due to thermal contraction after processing, and thus are easily designed.

As described above, in the insulating protective cover body 1 according to embodiment 4, the hemispheric projections 1n which are projections are arranged, on the inner surface 1g, in a staggered pattern between the first conductor insertion hole 1b and the second conductor insertion hole 1c. Thus, the first conductor 2 and the second conductor 3 are assuredly separated from the inner surface 1g, whereby increase in the temperature of the insulating protective cover body 1 can be suppressed. In addition, since the air flows 9 are formed along the paths between the hemispheric projections 1n, dissipation of heat generated at each of the first conductor 2, the second conductor 3, and the connection portion 8 to outside is facilitated.

### Embodiment 5 (under the scope of the claims)

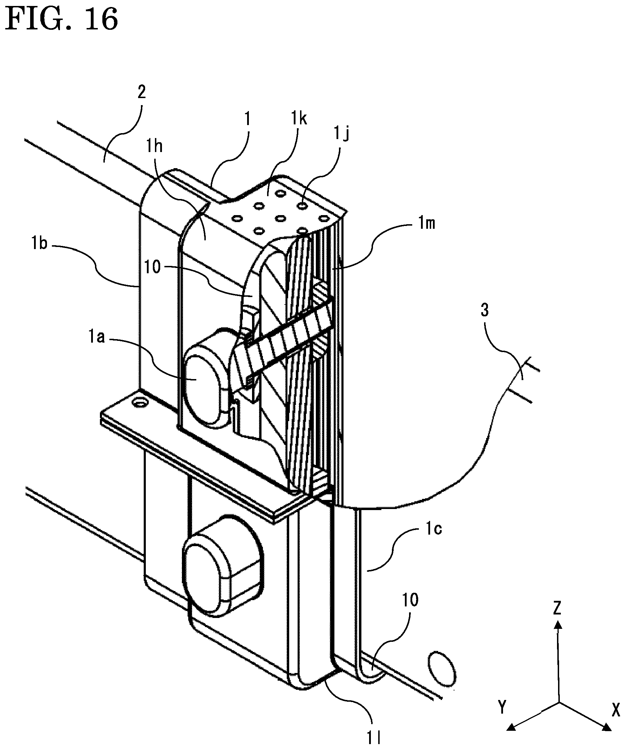

An insulating protective cover body 1 according to embodiment 5 will be described. FIG. 16 is a perspective cross-sectional view showing, in a partially cut manner, the insulating protective cover body according to embodiment 5 in a state of being attached to the first conductor 2 and the second conductor 3. The insulating protective cover body 1 according to embodiment 5 has a configuration in which the linear projections 1m described in embodiment 3 are disposed on the inner surface 1g in addition to the components of the insulating protective cover body 1 including the ventilation holes 1j described in embodiment 2.

In the insulating protective cover body 1, the ventilation holes 1j through which the space serving as the ventilation path 10 and outside are in communication with each other are provided in each of the upper surface 1k and the lower surface 1l. The linear projections 1m are a plurality of linear protrusions disposed between the first conductor insertion hole 1b and the second conductor insertion hole 1c. Since both the ventilation holes 1j and the linear projections 1m are provided to the insulating protective cover body 1, the air flows 9 from the ventilation holes 1j (not shown) in the lower surface 1l toward the ventilation holes 1j in the upper surface 1k are formed along the linear projections 1m. Thus, air in the ventilation path 10 can be more efficiently circulated, whereby dissipation of heat generated at each of the first conductor 2, the second conductor 3, and the connection portion 8 to outside is facilitated.

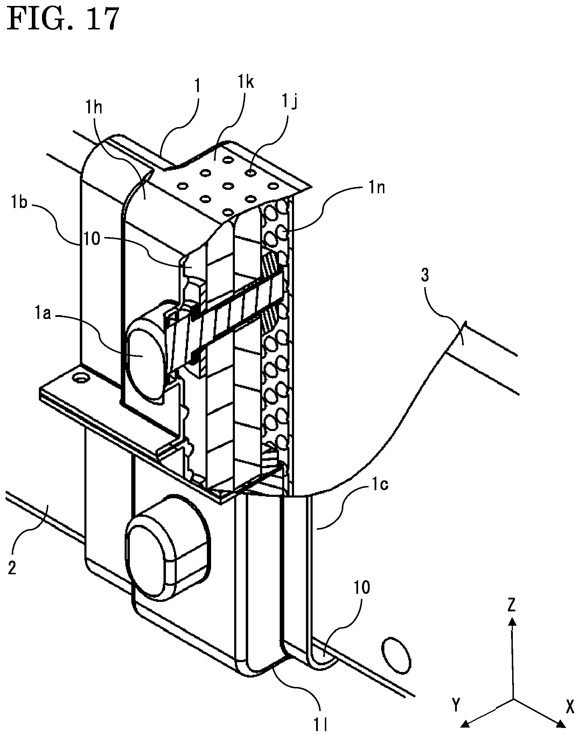

It is noted that although a configuration in which both the ventilation holes 1j and the linear projections 1m are provided to the insulating protective cover body 1 has been described above, the present disclosure is not limited to this configuration and may be a configuration in which, as shown in FIG. 17, the hemispheric projections 1n described in embodiment 4 are disposed on the inner surface 1g in addition to the components of the insulating protective cover body 1 including the ventilation holes 1j described in embodiment 2. In this configuration as well, the air flows 9 from the ventilation holes 1j in the lower surface 1l toward the ventilation holes 1j in the upper surface 1k are formed along the paths between the hemispheric projections 1n. Thus, air in the ventilation path 10 can be more efficiently circulated, whereby dissipation of heat generated at the connection portion 8 to outside is facilitated.

As described above, in the insulating protective cover body 1 according to embodiment 5, the linear projections 1m are disposed on the inner surface 1g in addition to the components of the insulating protective cover body 1 including the ventilation holes 1j. Consequently, the air flows 9 from the ventilation holes 1j in the lower surface 1l toward the ventilation holes 1j in the upper surface 1k are formed along the linear projections 1m. Thus, air in the ventilation path 10 can be more efficiently circulated, whereby dissipation of heat generated at each of the first conductor 2, the second conductor 3, and the connection portion 8 to outside can be facilitated.

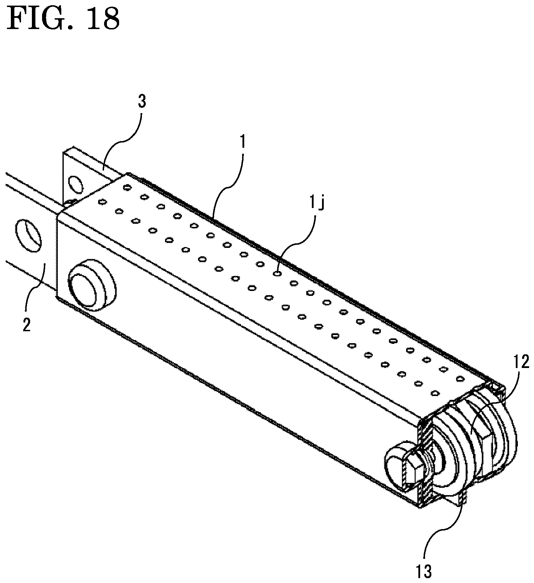

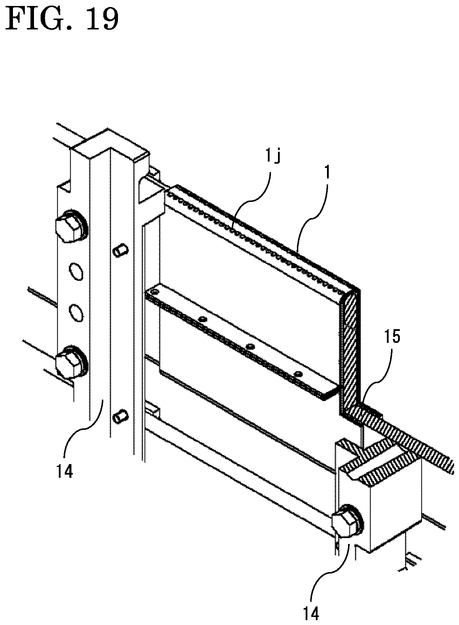

In each of the above-described embodiments, a case where the insulating protective cover body is used for insulation and protection of the connection portion of the conductors, has been described. However, the present disclosure is not limited this case. For example, it is needless to say that the insulating protective cover body can be used also for structures shown in FIG. 18 and FIG. 19. An insulating protective cover body 1 shown in FIG. 18 covers a portion at which an insulator 12 is disposed to maintain the insulation distance between the first conductor 2 and the second conductor 3. A cut portion 13 is disposed at a lower portion of the insulating protective cover body 1. An insulating protective cover body 1 shown in FIG. 19 covers an exposed conductor 15 between conductor supports 14. In either of the examples, ventilation holes 1j and projections (not shown) are provided.

Although the disclosure is described above in terms of various exemplary embodiments and implementations, it should be understood that the various features, aspects, and functionality described in one or more of the individual embodiments are not limited in their applicability to the particular embodiment with which they are described, but instead can be applied, alone or in various combinations to one or more of the embodiments of the disclosure, always within the scope defined by the claims.

### DESCRIPTION OF THE REFERENCE CHARACTERS

1 insulating protective cover body
1a conductor connection bolt cap portion
1b first conductor insertion hole
1c second conductor insertion hole
1d first insulating protective cover body cut portion
1e second insulating protective cover body cut portion
1f insulating protective cover body fastening hole
1g inner surface
1h outer surface
1i conductor connection bolt fixing projection
1j ventilation hole
1k upper surface
1l lower surface
1m linear projection
1n hemispheric projection
2 first conductor
3 second conductor
4 conductor connection bolt
5 spring washer
6 large washer
7 conductor connection nut
8 connection portion
9 air flow
10 ventilation path
11 cavity portion
12 insulator
13 cut portion
14 conductor support
15 conductor

## Claims

1. An insulating protective cover body (1) that
is configured to surround and cover a connection portion (8) at which a first conductor (2) and a second conductor (3) extending in a direction are connectable to each other, and
comprises conductor insertion holes (1b, 1c) provided so as to oppose to each other, the first conductor (2) being insertable in one of the conductor insertion holes (1b), the second conductor (3) being insertable in another one of the conductor insertion holes (1c), wherein
the insulating protective cover body (1) is made of a flexible material openable and closable at a cut portion thereof disposed along the direction in which the first conductor (2) and the second conductor (3) extend, and
a space serving as a ventilation path (10) in communication with outside is formed between an inner surface (1g) of the insulating protective cover body (1) and each of the first conductor (2) and the second conductor (3), **characterized in that**
a projection is disposed on the inner surface (1g), wherein
the projection is formed of linear projections (1m) that are disposed, as a plurality of linear protrusions, in a direction intersecting with the direction in which the first conductor (2) and the second conductor (3) extend, the linear projections (1m) being disposed between the one of the conductor insertion holes (1b) and the other one of the conductor insertion holes (1c), or
the projection is formed of hemispheric projections (1n) that are arranged, as hemispheric protrusions, in a staggered pattern between the one of the conductor insertion holes (1b) and the other one of the conductor insertion holes (1c).

2. The insulating protective cover body (1) according to claim 1, further comprising, at a position thereof opposing to a conductor connection bolt (4) of the connection portion (8), a conductor connection bolt cap portion (1a) which protrudes outward and which has an inner side that is a tubular cavity portion (11).

3. The insulating protective cover body (1) according to claim 2, wherein a conductor connection bolt fixing projection (1i) projecting along a side surface of the cavity portion (11) is disposed on the side surface of the cavity portion.

4. The insulating protective cover body (1) according to any one of claims 1 to 3, further comprising a ventilation hole (1j) through which the space and outside are in communication with each other.

5. The insulating protective cover body (1) according to claim 4, wherein the ventilation hole (1j) is provided in each of one side and another side of the insulating protective cover body (1) that oppose to each other.

6. The insulating protective cover body (1) according to any one of claims 1 to 5, wherein the cut portion has cut surfaces that face-to-face oppose to each other.

7. The insulating protective cover body (1) according to claim 6, wherein the cut portion is provided with insulating protective cover body fastening holes (1f) penetrating the cut surfaces.

## Patentansprüche

1. Isolierender Schutzhüllenkörper (1), der
eingerichtet ist, einen Verbindungsabschnitt (8) zu umgeben und abzudecken, bei dem ein erster Leiter (2) und ein zweiter Leiter (3), die sich in einer Richtung erstrecken, miteinander verbindbar sind, und
Leitereinführlöcher (1b, 1c) aufweist, die so vorgesehen sind, dass sie einander gegenüberliegen, wobei der erste Leiter (2) in eines der Leitereinführlöcher (1b) einführbar ist, wobei der zweite Leiter (3) in ein anderes der Leitereinführlöcher (1c) einführbar ist, wobei
der isolierende Schutzhüllenkörper (1) aus einem flexiblen Material hergestellt ist, der bei einem Einschnittabschnitt davon öffenbar und verschließbar ist, der entlang der Richtung angeordnet ist, in der sich der erste Leiter (2) und der zweite Leiter (3) erstrecken, und
ein Raum, der als Belüftungspfad (10) dient, der in Verbindung mit einer Außenseite steht, zwischen einer Innenfläche (1g) des isolierenden Schutzhüllenkörpers (1) und sowohl dem ersten Leiter (2) als auch dem zweiten Leiter (3) ausgebildet ist, **dadurch gekennzeichnet, dass**
ein Vorsprung an der Innenfläche (1g) angeordnet ist, wobei
der Vorsprung aus linearen Vorsprüngen (1m) gebildet ist, die als eine Vielzahl von linearen Vorsprüngen in einer Richtung angeordnet sind, die sich mit der Richtung kreuzt, in der sich der erste Leiter (2) und der zweite Leiter (3) erstrecken, wobei die linearen Vorsprünge (1m) zwischen dem einen der Leitereinführlöcher (1b) und dem anderen der Leitereinführlöcher (1c) angeordnet sind, oder
der Vorsprung aus hemisphärischen Vorsprüngen (1n) gebildet ist, die als hemisphärische Vorsprünge in einem gestapelten Muster zwischen dem einen der Leitereinführlöcher (1b) und dem anderen der Leitereinführlöcher (1c) angeordnet sind.

2. Isolierender Schutzhüllenkörper (1) nach Anspruch 1, der ferner in einer Position davon gegenüberliegend zu einem Leiterverbindungsbolzen (4) des Verbindungsabschnitts (8) einen Leiterverbindungsbolzen-Kappenabschnitt (1a) aufweist, der nach außen vorsteht und der eine Innenseite aufweist, die ein rohrförmiger Hohlraumabschnitt (11) ist.

3. Isolierender Schutzhüllenkörper (1) nach Anspruch 2, wobei ein Leiterverbindungsbolzen-Fixiervorsprung (1i), der entlang einer Seitenfläche des Hohlraumabschnitts (11) vorsteht, an der Seitenfläche des Hohlraumabschnitts angeordnet ist.

4. Isolierender Schutzhüllenkörper (1) nach einem der Ansprüche 1 bis 3, der ferner ein Belüftungsloch (1j) aufweist, durch welches der Raum und die Außenseite miteinander in Verbindung stehen.

5. Isolierender Schutzhüllenkörper (1) nach Anspruch 4, wobei das Belüftungsloch (1j) sowohl in einer Seite und in einer anderen Seite des isolierenden Schutzhüllenkörpers (1) vorgesehen ist, die einander gegenüberliegen.

6. Isolierender Schutzhüllenkörper (1) nach einem der Ansprüche 1 bis 5, wobei der Einschnittabschnitt Schnittflächen aufweist, die sich einander zugewandt gegenüberliegen.

7. Isolierender Schutzhüllenkörper (1) nach Anspruch 6, wobei der Einschnittabschnitt mit isolierenden Schutzhüllenkörper-Befestigungslöchern (1f) versehen ist, die in die Schnittflächen eindringen.

## Revendications

1. Corps de couvercle protecteur isolant (1) qui
est conçu pour entourer et recouvrir une partie de connexion (8) au niveau de laquelle un premier conducteur (2) et un second conducteur (3) s'étendant dans une direction peuvent être connectés l'un à l'autre, et
comprend des trous d'insertion de conducteur (1b, 1c) disposés de sorte à être opposés l'un à l'autre, le premier conducteur (2) pouvant être inséré dans l'un des trous d'insertion de conducteur (1b), le second conducteur (3) pouvant être inséré dans un autre des trous d'insertion de conducteur (1c),
le corps de couvercle protecteur isolant (1) étant en un matériau flexible qui peut être ouvert et fermé au niveau d'une partie découpée de celui-ci située le long de la direction dans laquelle le premier conducteur (2) et le second conducteur (3) s'étendent, et
un espace servant de voie de ventilation (10) en communication avec l'extérieur étant formé entre une surface intérieure (1g) du corps de couvercle protecteur isolant (1) et chacun du premier conducteur (2) et du second conducteur (3), **caractérisé en ce que**
une saillie est disposée sur la surface intérieure (1g),
la saillie étant formée de saillies linéaires (1m) qui sont disposées, comme une pluralité de saillies linéaires, dans une direction coupant la direction dans laquelle le premier conducteur (2) et le second conducteur (3) s'étendent, les saillies linéaires (1m) étant disposées entre l'un des trous d'insertion de conducteur (1b) et l'autre des trous d'insertion de conducteur (1c), ou
la saillie étant formée de saillies hémisphériques (1n) qui sont disposées, comme des protubérances hémisphériques, en quinconce entre l'un des trous d'insertion de conducteur (1b) et l'autre des trous d'insertion de conducteur (1c).

2. Corps de couvercle protecteur isolant (1) selon la revendication 1, comprenant en outre, au niveau d'une position de celui-ci opposée à un boulon de connexion de conducteur (4) de la partie de connexion (8), une partie de capuchon de boulon de connexion de conducteur (1a) qui fait saillie vers l'extérieur et qui a un côté intérieur qui est une partie de cavité tubulaire (11).

3. Corps de couvercle protecteur isolant (1) selon la revendication 2, une saillie de fixation de boulon de connexion de conducteur (1i) faisant saillie le long d'une surface latérale de la partie de cavité (11) étant disposée sur la surface latérale de la partie de cavité.

4. Corps de couvercle protecteur isolant (1) selon l'une quelconque des revendications 1 à 3, comprenant en outre un trou de ventilation (1j) par lequel l'espace et l'extérieur sont en communication l'un avec l'autre.

5. Corps de couvercle protecteur isolant (1) selon la revendication 4, le trou de ventilation (1j) étant situé dans chacun d'un côté et d'un autre côté du corps de couvercle protecteur isolant (1) qui sont opposés l'un à l'autre.

6. Corps de couvercle protecteur isolant (1) selon l'une quelconque des revendications 1 à 5, la partie découpée présentant des surfaces découpées qui sont opposées face à face l'une à l'autre.

7. Corps de couvercle protecteur isolant (1) selon la revendication 6, la partie découpée étant pourvue de trous de fixation de corps de couvercle protecteur isolant (1f) pénétrant dans les surfaces découpées.
